Europäisches Patentamt

European Patent Office

Office européen des brevets

(11) Publication number: **0 056 440**

**B2**

## (12) NEW EUROPEAN PATENT SPECIFICATION

(45) Date of publication of the new patent specification: **22.08.90**

(51) Int. Cl.⁵: **F 04 D 13/06, H 02 K 5/128**

(21) Application number: **81108865.7**

(22) Date of filing: **24.10.81**

(54) A canned motor pump for use in the high temperature.

(30) Priority: **16.01.81 JP 3780/81**

(43) Date of publication of application:
**28.07.82 Bulletin 82/30**

(45) Publication of the grant of the patent:
**10.04.85 Bulletin 85/15**

(45) Mention of the opposition decision:
**22.08.90 Bulletin 90/34**

(84) Designated Contracting States:
**CH DE FR GB IT LI NL SE**

(56) References cited:
CH-A- 346 109
GB-A- 701 511
GB-A- 906 306
GB-A-1 124 104
JP-A-5 566 952
US-A-3 192 861
US-A-3 306 222
US-A-3 347 168
US-A-3 483 413
US-A-3 688 137
**The file contains technical information submitted after the application was filed and not included in this specification**

(73) Proprietor: **NIKKISO CO., LTD.**
**No. 43-2, Ebisu 3-chome**
**Shibuya-ku Tokyo (JP)**

(72) Inventor: **Tsutsui, Toshiaki**
**c/o NIKKISO CO., LTD. No. 43-2, Ebisu 3-chome**
**Shibuya-ku Tokyo (JP)**
Inventor: **Ohki, Hiroshi**
**c/o NIKKISO CO., LTD. No. 43-2, Ebisu 3-chome**
**Shibuya-ku Tokyo (JP)**

(74) Representative: **Wilcken, Hugo, Dr. et al**
**Patentanwälte Dr. Hugo Wilcken Dipl.-Ing.**
**Thomas Wilcken Musterbahn 1**
**D-2400 Lübeck (DE)**

(56) References cited:
I.E.E. Monograph Series 14, 1973, Peter Peregrinus Ltd, R.W. Sillars, "Electrical insulating materials and their application", page 127

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to a canned motor pump transporting a high temperature fluid or liquid, more particularly to a canned motor pump fur use at a high temperature in which the generating heat from the motor can be absorbed in a treating fluid upon circulation through the canned motor at the high temperature for maintaining optimum operation of the motor, thereby permitting the heat load of a heating source to be alleviated when used in a plant for manufacturing the high temperature liquid.

In general, the canned motor pump is cooled at its motor part and lubricated at its bearing by circulating an aliquot of the treating fluid through a rotor chamber of the canned motor (US—A—3 306 222). In the canned motor pump for treating the fluid of more than 200°C, however, the motor is difficult to be cooled directly by the treating fluid, necessitating a cooling system, for example, with a cooling water or others. For this reason, such type of canned motor has a disadvantage of a high initial cost for additional arrangement of a cooling water system other than the pumping system. Further, the conventional canned motor pump is unsatisfactory in saving of a natural resource or energy, because of a higher heat loss caused by cooling and of an extremely high fuel cost of the heating source for the high temperature fluid.

Although the improvement in the heat resistance of motor components is necessary for enhancing that of the canned motor itself, the dielectric strength of the winding in the high temperature is especially important. The conventional canned motor of a general structure has an insulation for insulating a set of windings, which is thermally deteriorated in the high temperature atmosphere of more than 200°C, leading to a poor mechanical strength and disruption of the windings (US—A—3 688 137).

From JP—A—55/66952 it is known per se a material which consists of silicone resin filled with fluorinated mica. The mica, however, must be treated at very high temperatures, such as 800 to 1000°C for decomposing the silicone resin component in order to achieve ceramitizing reaction with the fluorinated mica component, as shown in several examples. In other words, the heat-resistant composition disclosed therein is used mainly for preparing a porcelain of high heat-resistance, high resistance to the heat-shock and high strength.

A general object of the invention is to provide an economically superior canned motor pump for use at a high temperature in which the insulation construction of the field winding for the canned motor is improved in dielectric strength for the high temperature, the heat value generated by the canned motor is absorbed by the treating fluid flowing through the rotor chamber of the motor, the heat load for the heating source in the manufacturing plant of the high temperature fluid is alleviated, and the saving of natural resources and energy shall be achieved.

A principal object of the invention is to provide a canned motor pump for use at a high temperature and for treating a fluid of at least above 200°C which comprises a canned motor improved in dielectric strength for the high temperature by impregnating its field winding with a further improved insulating material.

To this end, the present invention as defined in the first part of claim 1 is characterized in that the mica of said impregnating material consists of synthetic fluorinated mica pieces and is contained in suspension in an organic silicone compound solvent, said mica pieces having a thickness below 5 nm and a diameter of 0.1 to 5 µm, and in that the ceramicization temperature for the field winding prepared with such impregnation material is above 200°C or more, whereby the dielectric strength is further improved in order to withstand a temperature which ranges from at least above 300°C up to the permissible dielectric strength temperature of said field winding.

If such type of insulating is used, some fluorine compounds from the synthetic fluorinated mica may vaporize in the high temperature atmosphere of more than 200°C or more which compounds may melt siloxane from the organic silicone compound for ceramicization, thereby increasing the mechanical and dielectric strength of the winding.

The canned motor pump according to the invention may further comprise a thermal insulation sealingly surrounding the whole periphery of the canned motor, all the generated heat of which is absorbed by the treating fluid, thereby allowing the canned motor pump to be used as a pump for feeding the high temperature fluid and alleviating the heat load for an extern heating source heating the fluid to be conveyed by the pump.

The invention will now be described in more detail by the non-limiting embodiments with reference to the accompanying drawings.

One way of carrying out the invention is described in detail below with reference to drawing which illustrate preferred embodiments, in which:—

Figure 1 is a sectional side view of a main portion of the canned motor pump for use in the high temperature according to one embodiment of the invention,

Figure 2 is a sectional side view of a main portion of the canned motor pump according to another embodiment of the invention,

Figure 3 is a sectional side view of a main portion of the canned motor pump according to a further embodiment of the invention, and

Figure 4 is a sectional side view of a main portion of the canned motor pump according to a still further embodiment of the invention.

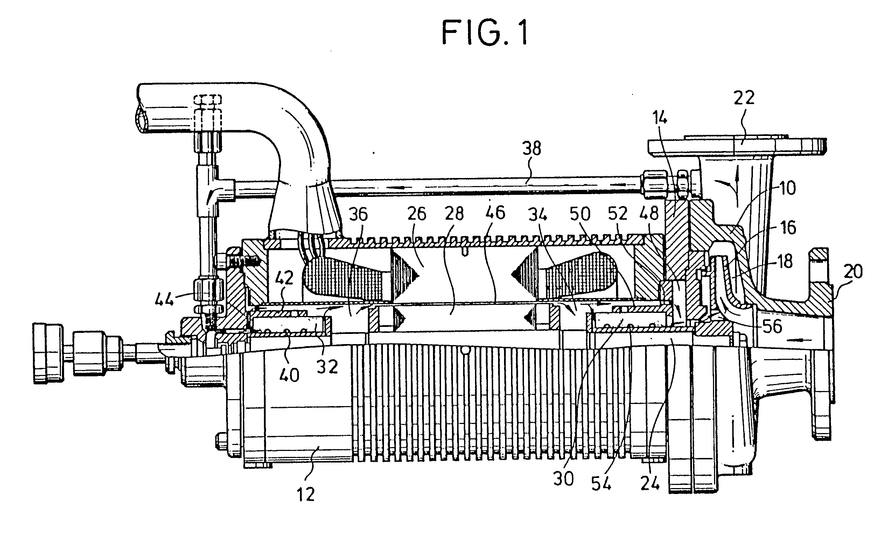

In Figure 1 there is illustrated the canned motor pump for use in the high temperature according to the invention comprising a pump 10 and a canned motor 12, wherein the pump 10 and the motor 12 are interchangeably connected with an adapter 14.

The pump 10 is provided with a suction pipe 20 and a delivery pipe 22, each communicating with a pump chamber 18 having therein an impeller 16 which is secured to an extended end of a rotor shaft 24 for the motor 12. The motor 12 comprises a stator assembly 26 and a rotor assembly 28. The rotor shaft 24 is supported by a front and a rear bearing 30 and 32, respectively. At the either ends of the rotor assembly 28 are formed a front rotor chamber 34 and a rear rotor chamber 36, respectively. To the rear rotor chamber 36 at its rear end is communicated an external conduit 38 derived from the delivery pipe 22 of the pump 10. Thus, an aliquot of the treating fluid is introduced into the rear rotor chamber 36 through the delivery pipe 22 of the pump 10 and is passed through holes 40 provided on an inner circumference of a rear bearing 32 and through holes 44 provided in a bearing support 42 securing the rear bearing 32 in order to lubricate the latter and to absorb the generated heat from the motor. The treating fluid introduced into the rear rotor chamber 36 is transported to the front rotor chamber 34 through a gap 46 between the rotor and the stator.

The adapter 14 is provided with a flowing path 48 for communicating the front rotor chamber 34 with the pump 10 on its lower pressure side. In other words, the flowing path 48 is communicated with the front rotor chamber 34 through holes 52 provided in a bearing support 50 securing a front bearing 30 and through holes 54 provided on an inner circumference of the front bearing 30 in order to introduce the treating fluid, which has completed the lubrication of the front bearing 30 and the absorption of the generated heat from the motor, into the flowing path 48. The treating fluid introduced into the flowing path 48 is then guided to the impeller 16 on its suction port side via a balance hole 56 which is passed through the impeller 16 from its back side.

For the canned motor used in the invention, a field winding is improved in its insulating treatment in order to enhance the heat resistance or the dielectric strength for the high temperature in comparison with the conventional canned motor. A copper wire employed as a winding conductor is plated with nickel thereon and is additionally coated with a glass insulating coat for protection from thermal oxidation. Further, a laminated mica plate bonded with an inorganic material is used for a wedge, while laminated mica with a possibly least amount of a silicone resin adhesive is utilized for a flexible insulating sheet. As an impregnating material for insulating the windings from each other and an embedding material for coil ends, there is used a suspension of synthetic fluorinated mica pieces in an organic silicone compound solvent. In this case, the synthetic fluorinated mica pieces having the thickness below 5 nm and the diameter of 0.1 to 5 μm are used together with the organic solvent, such as a solvent mixture of sylene, butylcellosolve and cellosolve acetate, in a weight ratio of the mica to the solvent of 1:1 or more. The resulting suspension is then impregnated and cured onto the winding.

If the field winding is treated for insulation in this way, some fluorine compounds, such as $SiF_4$, KF and others, from the synthetic fluorinated mica may vaporize and melt siloxane from the organic silicone compound for ceramicization in the high temperature of more than 200°C, thereby improving the mechanical strength and dielectric strength of the winding. Thus, the canned motor may be imparted with sufficient dielectric strength to ensure the high temperature atmosphere of more than 300°C, thereby permitting the canned motor to be satisfactorily operated in the canned motor pump.

In accordance with the embodiment as shown in Fig. 1, the treating fluid of high temperature discharged from the pump 10 is cooled by the ambient atmosphere when introduced into the rear trotor chamber 36 through the external conduit 38. The treating fluid thus cooled absorbs the heat generated from the motor upon flowing through the canned motor 12 for substantially cooling the motor and lubricating the front and rear bearings 30, 32. The treating fluid, after absorbing all of the heat generated from the motor, is circulated into the pump 10 on its lower pressure side through the path 48 of the adapter 14.

As apparent from the foregoing, the canned motor pump of this embodiment may introduce an aliquot of the high temperature fluid into the canned motor under natural cooling and allow all of the generated heat of the motor to be absorbed by the treating fluid which is then circulated to the pump, thereby achieving the effective utilization of the heat energy. Thus, pumping of the high temperature fluid, which has hitherto been considered difficult, may be conveniently and economically achieved. When the temperature of the treating fluid increases, the external conduit 38 is preferably provided with a cooling fin, if necessary.

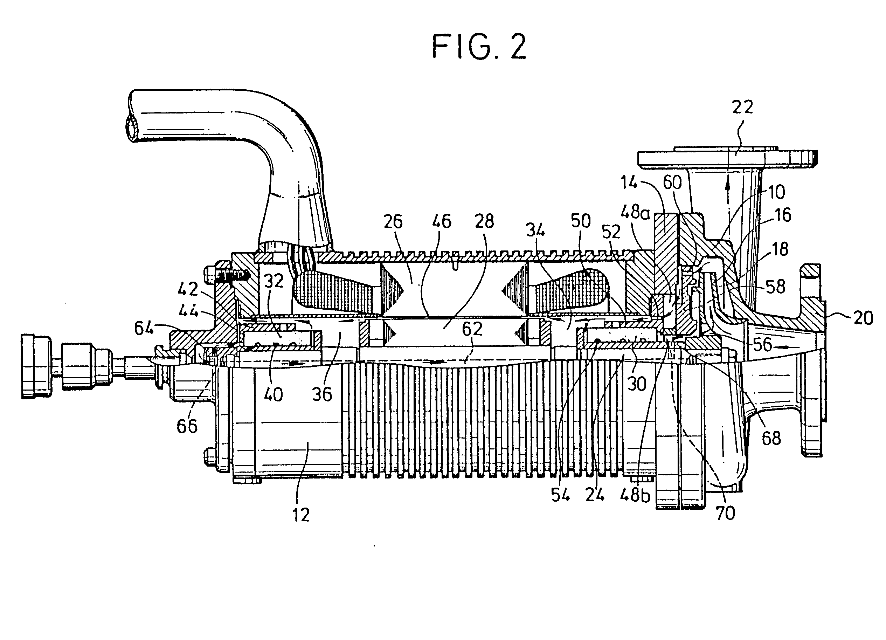

In Fig. 2 there is illustrated another embodiment of the canned motor pump for use in the high temperature according to the invention. In this embodiment, a liner disc 58 arranged between the pump 10 and the adapter 14 at their joining site is extended at its rotor shaft 24 side, which is fitted with the bearing support 50 for dividing the path 48 of the adapter 14 into two portions (48a, 48b), one of which (48a) is then communicated with a hole 60 located at the liner disc 58 on its periphery side opposing to the impeller 16.

Further, an internal conduit 62 is formed axially through the rotor shaft 24 and is communicated with the rear rotor chamber 36 via a hole 66 passed through an end nut 64 fitted to the rear end of the rotor shaft 24 on one hand, while the internal conduit 62 is communicated, on the other hand, with the other path portion 48b of the adapter 14 via a hole 70 passed through a spacer 68 provided at the front end of the rotor shaft 24. The path portion 48b is then communicated with the pump 10 on its lower pressure side. The construction of this embodiment is identical to that of Fig. 1 except that the internal conduit is provided within the rotor shaft in lieu of the external conduit. The closer description, therefore, may be omitted for the same construction.

In the embodiment of the canned motor pump as shown in Fig. 2 an aliquot of the high temperature fluid sucked in the pump 10 is introduced into the front rotor chamber 34 through the hole 60, the path portion 48a and the hole 52 in order. Then, the aliquot of the treating fluid introduced into the front rotor chamber 34 is circulated to the pump 10 on its lower pressure side sequentially through the holes 54, the path portion 48b and the balance hole 56 of the impeller 16 in order to lubricate the front bearing 30. A majority of the treating fluid introduced into the front rotor chamber 34, on the other hand, flows through the gap 46 between the rotor and the stator and then is guided to the rear rotor chamber 36 in order to absorb the generated heat of the motor for cooling. An aliquot of the treating fluid introduced into the rear rotor chamber 36 is circulated to the holes 40 for lubricating the rear bearing 32. Then, a majority of the treating fluid introduced into the rear rotor 36 is circulated to the pump 10 on its lower pressure side sequentially through the hole 44 of the bearing support 42, the hole 66 of the end nut 64, the internal conduit 62 of the rotor shaft 24, the hole 70 of the spacer 68, the path 48b and the balance hole 56 of the impeller 16. Thus, the embodiment as shown in Fig. 2 has advantages in that the heat dissipation from the high temperature fluid may be prevented, that the effective heat absorption or cooling may be achieved and that the construction may be convenient owing to unnecessity of arranging the external conduit when the canned motor pump is used for the high temperature fluid with possible temperature decrease or for the treating fluid of a lower range of high temperature.

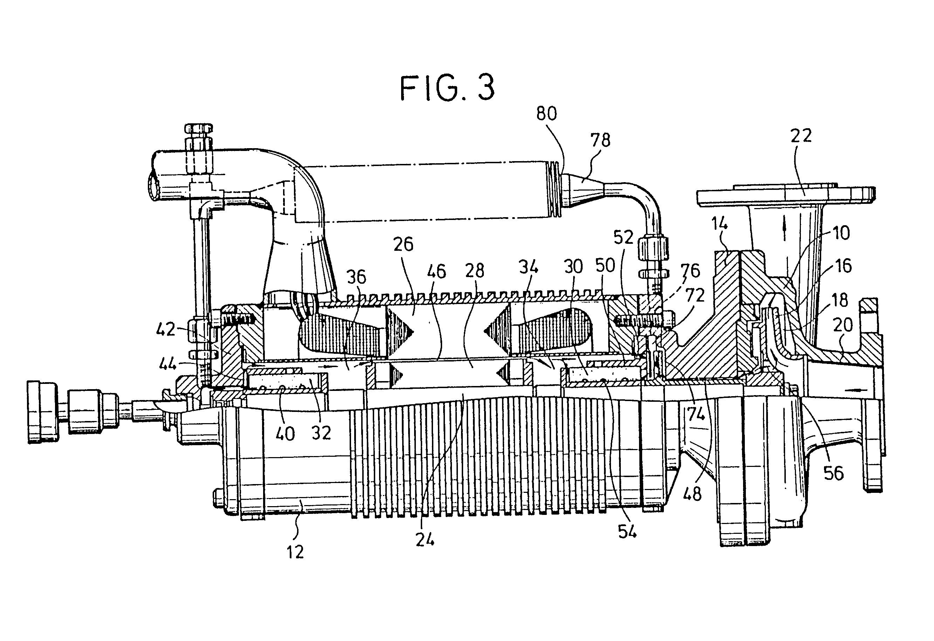

In Fig. 3, there is illustrated a further embodiment of the canned motor pump for use in the high temperature according to the invention, wherein an auxiliary pump chamber 72 is defined between the front rotor chamber 34 and the adapter 14 at their joining site. Within the auxiliary pump chamber 72 is arranged an auxiliary impeller 74, which is secured to the rotor shaft 24.

The adapter 14 is provided with the path 48, as in the embodiment shown in Fig. 1, one end of which is communicated with the back side of the impeller 16 in the pump chamber 18 and the other end is communicated with the back side of the auxiliary impeller 74 in the auxiliary pump chamber 72. Further, a part of the adapter 14 is provided with a path 76 communicating the auxiliary pump chamber 72 on its delivery side, while an external conduit 78 is arranged for communicating the path 76 with the rear rotor chamber 36. The external conduit 78 may be provided with a cooling fin 80, if desired. Otherwise the construction of this embodiment is identical to that of Fig. 1. The close description, therefore, may be omitted for the same construction.

In accordance with the canned motor pump as shown in Fig. 3, an aliquot of the high temperature fluid to be treated is introduced into the auxiliary pump chamber 72 via the path 48 from the back side of the impeller 16 and then is guided to the rear rotor chamber 36 through the external conduit 78 under action of the auxiliary impeller 74, wherein the high temperature fluid is cooled by the ambient atmosphere in the external conduit 78. The treating fluid thus cooled may absorb the generated heat from the motor upon flowing through the canned motor 12 on one hand and lubricate the front and rear bearings on the other hand. The treating fluid introduced into the front rotor chamber 34 is then forcibly circulated to the external conduit 78 under action of the auxiliary impeller 74, thereby repeating the operation as described hereinbefore. Thus, in accordance with the canned motor pump as shown in Fig. 3, a deficient or excess amount of the treating fluid circulated through the canned motor 12 may be adjusted by the treating fluid of the pump 10 through the path 48 of the adapter 14. Therefore, an aliquot of the high temperature fluid may be circulated through the canned motor under natural cooling, as in the embodiment in Fig. 1, thereby absorbing all of the generated heat of the motor. Thus, the pumping of the high temperature fluid may be conveniently and economically effected.

As apparent from the various embodiments described hereinbefore, the canned motor pump according to the invention, when used for treating the high temperature fluid of more than 200°C, permits the canned motor to be operated with sufficient dielectric strength and also to be cooled and lubricated under natural cooling of the high temperature fluid, thereby providing the excellent and economical canned motor pump contributing to the saving in the natural resource and energy without arranging a particular cooling means.

In addition, the canned motor pump according to the invention, owing to its improved dielectric strength of the canned motor, may employ the treating fluid of relatively high temperature to absorb the generated heat from the motor for cooling, thereby allowing not only the means of less energy-loss to be employed but also the heat load of the heating source (for example, a fuel cost for a boiler or a heater) to be alleviated in a plant for manufacturing the high temperature liquid.

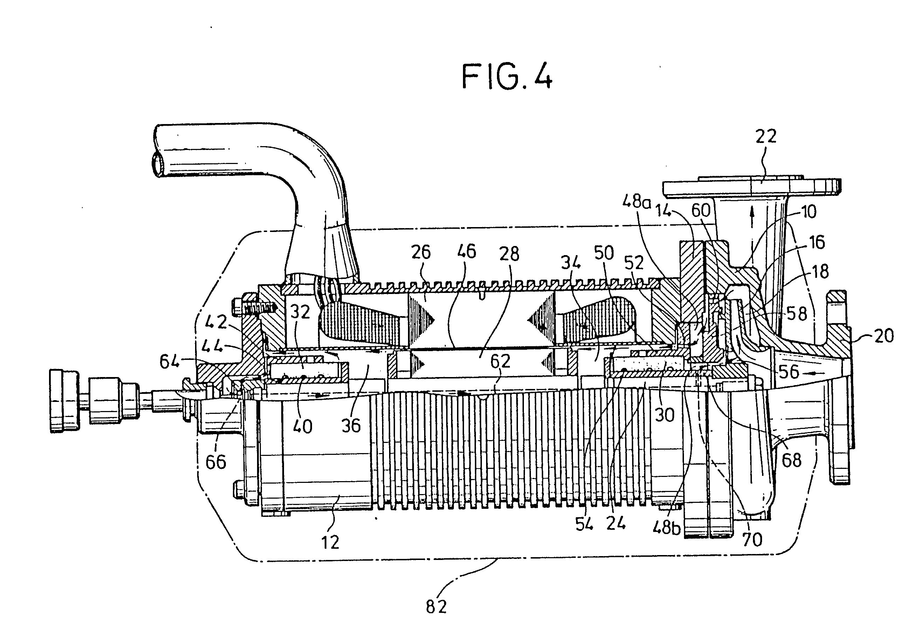

As shown in Fig. 4, for example, the whole circumference of the canned motor 12 as well as portions of the pump 10 and the adapter 14 connected to the canned motor 12 are closely surrounded by a thermal insulating material 82, which may completely prevent the generated heat of the canned motor 12 from being dissipated. Thus, all of the generated heat may be absorbed, as in the embodiment shown in Fig. 2, into the treating fluid circulating through the caned motor 12. In this way, the canned motor pump as shown in Fig. 4, if employed as a feeding pump in the manufacturing plant for the high temperature fluid, permits all of the generated heat of the motor to be absorbed in the treating fluid, thereby reducing the energy loss and alleviating the heat load of the heating source (for example, the fuel cost for the boiler or the heater).

**Claims**

1. A canned motor pump for use at a high temperature for treating a fluid of at least above 200°C, comprising a canned motor (12) the dielectric strength of the field winding of which is improved for a higher temperature, and a circulation system for introducing an aliquot of the treating fluid through an external or internal conduit (38; 62; 78) into the rotor chamber (34, 36) of said motor and then back to the pump in order to absorb heat generated by said motor (12) by said aliquot, said field winding comprising windings made of nickel-plated copper wire coated thereon with a glass insulating coat, a flexible insulating sheet enrolling the windings and made of laminated mica using a possibly least amount of silicone resin adhesive, a wedge securing the windings in the slots of the motor armature and made of laminated mica bonded with an inorganic material, and comprising a cured impregnating material insulating the windings from each other, embedding same in said slots and containing an organic silicone resin filled with mica, characterised in that the mica of said impregnating material consists of synthetic fluorinated mica pieces and is contained in suspension in an organic silicone compound solvent, said mica pieces having a thickness below 5 nm and a diameter of 0.1 to 5 µm, and in that the ceramicization temperature for the field winding prepared with such impregnation material is above 200°C or more, whereby the dielectric strength is further improved in order to withstand a temperature which ranges from at least above 300°C up to the permissible dielectric strength temperature of said field winding.

2. The canned motor pump according to claim 1, which further comprises a thermal insulation (82) surrounding the whole periphery of the canned motor (12), the generated heat of which is absorbed by the treating fluid.

**Patentansprüche**

1. Gekapselte Motorpumpe zur Verwendung bei hoher Temperatur für die Behandlung eines Fluids von wenigstens oberhalb 200°C, umfassend einen gekapselten Motor (12), bei dem die dielektrische Festigkeit der Feldwindung für eine höhedre Temperatur verbessert ist, und ein Zirkulationssystem zum Einführen eines Anteiles des Behandlungsfluides durch ein externes oder internes Rohr (38; 62; 78) in die Rotorkammer (34, 36) des Motors und dann zurück zu der Pumpe, um die durch den Motor (12) erzeugte Wärme durch den genannten Anteil zu absorbieren, wobei die Feldwindung umfaßt Wicklungen, die aus nickelplattierten Kupferdrähten mit einem Glasisolationsüberzug bestehen, ein flexibles Isolationsblatt, das die Wicklungen umgibt und aus laminiertem Mica besteht, wobei ein möglichst kleiner Betrag an Silikonharzkleber verwendet ist, einen Keil, der die Wicklungen in den Nuten des Motorankers sichert und aus laminiertem, mit einem anorganischen Material gebundenem Mica besteht, und ein ausgehärtetes Imprägniermaterial, das die Wicklungen gegeneinander isoliert, sie in den Nuten einbettet und ein mit Mica gefülltes, organisches Silikonharz enthält, dadurch gekennzeichnet, daß das Mica Imprägniermaterials aus synthetischen, fluorinisierten Micateilen besteht und in Suspension in einem organischen Silikonverbindungs-Lösungsmittel enthalten ist, daß die Micateile eine Dicke unterhalb 5 nm und einen Durchmesser von 0,1 bis 5 µm aufweisen und daß die Keramisierungstemperatur für die mit einem solchen Imprägniermaterial präparierte Feldwindung über 200°C oder mehr liegt, wodurch die dielektrische Festigkeit weiter verbessert ist, um einer Temperatur zu widerstehen, die im Bereich von wenigstens oberhalb 300°C bis zur zulässigen dielektrischen Festigkeitstemperatur der Feldwindung liegt.

2. Gekapselte Motorpumpe nach Anspruch 1, dadurch gekennzeichnet, daß sie weiter eine thermische Isolation umfaßt, die den gesamten Umfang des gekapselten Motors (12) umgibt, dessen erzeugte Wärme durch das Behandlungsfluid absorbiert wird.

**Revendications**

1. Une motopompe à moteur calorifugé à utiliser à haute température, destinée à traiter un fluide se trouvant à une température a plus de 200°C, comportant un moteur calorifugé (12), dont la résistance diélectrique d'enroulement de champ est améliorée en vue d'une température élevée, et un système de circulation pour introduire une fraction du fluide à traiter à travers un conduit externe ou interne (38; 62; 78) dans la chambre rotorique (34, 36) dudit moteur et la renvoyer vers la pompe afin d'absorber, à l'aide de cette fraction, la chaleur engendrée par ledit moteur (12), ledit enroulement de champ comprenant des enroulements en fil de cuivre plaqué nickel revêtus d'un revêtement isolant en verre, une feuille isolante souple enroulée autour des enroulements et constituée de mica stratifié utilisant une quantité, la plus faible possible d'adhésif de résine siliconée, une cale fixant les enroulements dans les fentes de l'induit du moteur et constituée de mica stratifié lié avec une matière inorganique, et comprenant une matière d'imprégnation traitèe isolant les enroulements l'un de l'autre, noyant ceux-ci lesdites fentes et contenant une résine organique siliconée chargée en mica, caractérisé en ce que le mica de ladite matière d'imprégnation consiste en morceaux de mica fluoré synthétique et est contenue en suspension dans un solvant composé organique siliconée, lesdits morceaux de mica étant d'une épaisseur inférieure à 5 nm at d'un diamètre de 0,1 à 5 µm, et en ce que la température de céramisation de l'enroulement de champ préparé avec cette matière d'imprégnation est supérieure à 200°C ou davantage, grâce à quoi la résistance diélectrique est encore améliorée pour résister à une température dans la plage s'étendant depuis, au moins, plus de 300°C jusqu'à la température admissible de résistance diélectrique dudit enroulement de champ.

2. La motopompe à moteur calorifugé selon la revendication 1, qui comprend en outre une isolation thermique (82) entourant toute la périphérie de la motopompe à moteur calorifugé (12), dont la chaleur engendrée est absorbée par le fluide à traiter.

# FIG.1

EP 0 056 440 B2

# FIG. 2

EP 0 056 440 B2

FIG. 3

EP 0 056 440 B2

FIG.4